# EUROPEAN PATENT APPLICATION

(11) **EP 1 883 125 A1**
(43) Date of publication of application: **30.01.2008**
(21) Application number: 06732522.5
(22) Date of filing: 11.05.2006
(51) Int. Cl.: H01M 2/04

(54) **SEALING BODY AND CELL PACK USING THE SAME**

(30) Priority: 16.05.2005 JP 2005143024
(71) Applicant: Tyco Electronics Raychem K.K., Kawasaki-shi, Kanagawa 213-8535 (JP)
(72) Inventor: HASUNUMA, Takashi c/o Tyco Electronics Raychem KK, Ibaraki 3000626 (JP); TANAKA, Arata c/o Tyco Electronics Raychem KK, Ibaraki 3000626 (JP); KOYAMA, Hiroyuki c/o Tyco Electronics Raychem KK, Ibaraki 3000626 (JP)
(74) Representative: Johnstone, Douglas Ian
(86) International application number: PCT/JP2006/309491
(87) International publication number: WO 2006/123571

(57) **Abstract**

A cell pack includes a secondary cell having a can-shaped body (100) and a sealing body (102) for sealing an opening of the can-shaped body (100) and a PTC element (120). The cell pack may be made compact by the sealing body having the PTC element mounted thereon.

## Description

### Technical Field

The present invention relates to a sealing piece (or a sealing plate) and a battery pack having such sealing piece.

### Background Art

Various secondary batteries are used in portable electric or electronic devices. In such devices, various designs are contrived to keep to a minimum the volume of space that the constituent elements of the devices, such as the secondary batteries, take up.

Even when trying to keep the volume of space to a minimum, the primary functions of the element and its secondary functions must not be hampered. A secondary battery used in a portable device is provided with a PTC device, which prevents excessive current flowing during charge and discharge, or prevents the temperature of the portable device or an element thereof from becoming abnormally high.

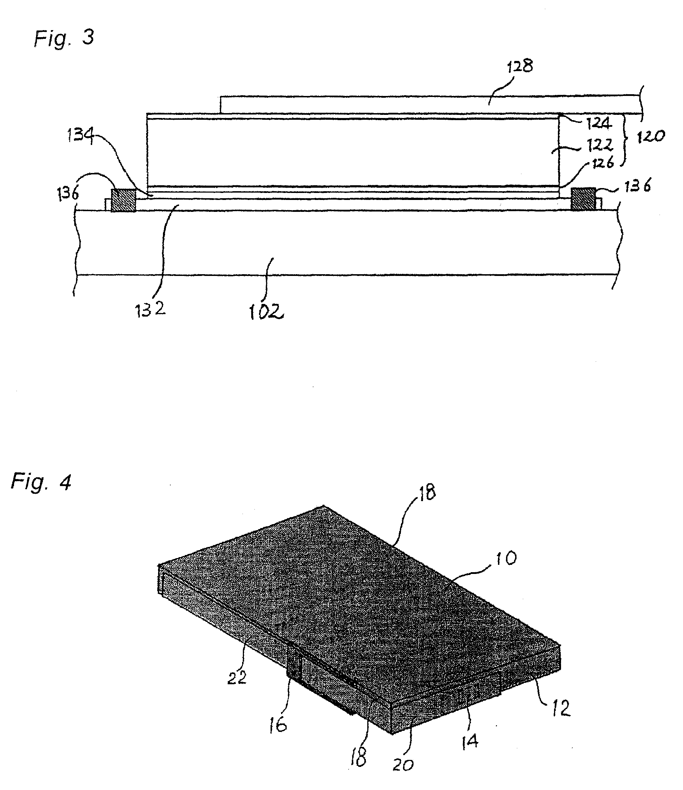

A so-called polymer PTC device (or PPTC device), comprising a conductive polymer element in which carbon black is dispersed and electrodes sandwiching the element, is used as such a PTC device. A secondary battery having such a PTC device is shown as one example of a battery pack in a schematic perspective drawing of Fig. 4.

In the battery pack shown in the Figure, an aluminum or steel canister 10 is used as a casing of the battery pack. This also serves as a terminal on one of the electrodes (positive or negative electrode) of the battery. A terminal 14 (shown in dotted lines as it is not visible) protruding from a sealing piece 12 placed at the end of the casing serves as the terminal of the other electrode (negative or positive electrode). The PTC device 16 is placed on the side surface 18 of the canister to constitute a battery pack with enhanced safety. One lead 20 of the PTC device is connected electrically with the terminal 14. The other lead 22 of the PTC device (faces the lead 20 across the PTC device) is connected electrically with other circuit (not illustrated) as predetermined.

Such a battery pack is not necessarily desirable for a portable device where further size reduction is required, since the PTC device is placed on the side surface of the canister, thereby increasing the bulk of the battery pack as a whole. However, in order to use commercially available PTC devices, the battery pack has to be as described, and such a battery pack is currently being used.

It is noted a battery pack with the PTC device placed on the bottom of the battery canister is also proposed (see Patent Document 1 below). However, this battery pack has a recess formed on the bottom of the canister, with the PTC device placed in the recess, with the result that the canister, which is required for the battery, is increased in bulk by an amount represented by the recessed portion. Thus, as with the embodiment wherein the PTC device is placed on the side surface of the canister, the battery pack wherein the PTC device is placed on the bottom of the canister is also increased in bulk.
[Patent Document 1] Japanese Unexamined Patent Publication No. 169506/1995

### Disclosure of the Invention

### Problem to be Solved by the Invention

Thus the problem to be solved by the present invention is to provide a more compact battery pack.

### Means to Solve the Problem

It has been found that the above problem could be solved by attaching the PTC device directly on (or immediately above) the sealing piece of the battery.

Thus, in the first aspect, this invention provides a battery pack which comprises a secondary battery comprising a canister and a sealing piece to seal an opening of the canister, and a PTC device, which battery pack is characterized in that the sealing piece comprises the PTC device attached on (or to) top of the sealing piece.

In the present invention, the PTC device is attached directly on the sealing piece. This attachment is achieved by a connecting element which is present between the PTC device and the sealing piece placed adjacently to each other and which electrically (and mechanically) connects the PTC device and the sealing piece. As such connecting element, for example, a bonding material may be exemplified such as a solder (which may be one formed by a solder paste) as described below, an electrically conductive adhesive or the like. Such a connecting element connects the PTC device (more particularly its metal layer thereof, for example, a metal foil) to the sealing piece.

Specifically, the bonding material such as a solder, an electrically conductive adhesive or the like, which is present as the connecting element, is preferably present in the form of a layer between the PTC device (more particularly the metal layer of the device) and the sealing piece. Such a layer is preferably present between the PTC device and the sealing piece in such a way that it is present between the entire part of the bottom surface of the PTC device and the sealing piece. However, as long as the required electric conductivity is achieved, it is not necessarily required for the bonding material layer to be present over the entire part of the bottom surface of the PTC device (where the layer is not present may exist as a void).

In other embodiment, the PTC device, more particularly the metal layer and a metal lead, which is adjacent to the metal layer are connected electrically (and mechanically), and such metal lead is adjacent to the sealing piece and is connected thereto electrically (and mechanically). In this case, the connection between the PTC device and the metal lead is effected by a bonding material, such as a solder, an electrically conductive adhesive or the like (preferably in the form of a layer). Thus, in this embodiment, the connecting element between the PTC device and the sealing piece may be referred to be formed by the metal lead and the bonding materials on both sides of the metal lead. It is noted that the connection between the metal lead and the sealing piece may be effected by welding, and usually such welding is particularly preferable. In this case, the connecting element formed between the PTC element and the metal lead is referred to be formed by the metal lead and the bonding material (preferably in the form of a layer) located on the PTC device side thereof.

It is noted that the metal lead may be of any form as far as the PTC device and the sealing piece are connected as described above. The metal lead is usually in the form of a metal strip. The metal lead may present under the entire or a portion of the bottom surface of the PTC device (namely, a surface facing to the sealing piece). In other embodiment, the metal layer may comprise a part which extends outwardly of the PTC device from the bottom surface of the PTC device (see Fig. 3 which will be referred to below).

In the above described other embodiment, the explanation given previously of using the bonding material as the connecting material is similarly applicable (that is, it is not required for the bonding material as the connecting element to be present in the entire of the gap between the two members to be connected). It is noted that when the metal lead is connected to the sealing piece by welding, a welded section exists between the PTC device and the sealing piece. Such a welded section (which may be in a layer form) is a section that is formed by melting the metal lead and the sealing piece adjacent thereto at their contact interface (followed by being cooled). Melting can be effected by generating heat at such contact interface through an appropriate means (for example by using ultrasonic welding); the melted section may be the entire contact interface or, as long as the required electric conductivity is obtained, a part of the contact interface (see for example Fig. 3).

In the present invention, the components constituting the secondary battery (for example the canister, sealing piece, and within the canister, a positive electrode plate(s), a negative electrode plate(s), a separator(s), electrolyte and the like) may be substantially the same as the prior art, in other words, those conventionally used in the secondary battery, It is of course that the battery pack according to the present invention described above and below comprises such component(s) as required. It is noted that as well-known, the canister has an opening and the sealing piece closes the opening for sealing.

One of the characteristics of the present invention is that the PTC device is attached directly on the sealing piece through the connecting element of any one of the above described various embodiments. In order to mean such attachment, the expression "attaching (or placing) the PTC device directly on top of the sealing piece" is used in the present description.

Further, in a second aspect, the present invention provides a sealing piece having a PTC device placed on top of, namely placed directly on the sealing piece. This sealing piece, combined with the canister and other components constituting the secondary battery, may be used to manufacture the secondary battery pack. It is noted "on top of the sealing piece" means one side of the sealing piece that side is exposed when assembled as the battery pack.

Since there is usually a terminal which protrudes from the sealing piece in a battery pack, the attachment of the PTC device is effected upon the assembling the battery pack such that the PTC device is placed on the sealing piece while the attachment of the PTC device does not interfere the protrusion of the terminal.

### Effect of the Invention

As explained previously, in the sealing piece of the secondary battery, the terminal protrudes from the surface of the sealing piece, so that a space from the surface of the sealing piece (in other words the upper surface of the sealing piece) to the apex of the terminal is required for the terminal. In the present invention, when the PTC device is placed on top of the sealing piece, most of the PTC device and preferably substantially the whole of the PTC device may be accommodated within such space (that is such space is used effectively), thereby minimizing the increase in the volume of the battery pack caused by the placement of the PTC device, and preferably substantially no increasing of the volume is achieved.

### Brief Description of the Drawings

[Fig. 1] A schematic cross-sectional view of an upper portion of the battery pack according to the present invention.
[Fig. 2] An enlarged schematic view of a portion of a sealing piece of the battery pack of Fig. 1 wherein a PTC device is attached to the sealing piece.
[Fig. 3] An enlarged schematic view of a portion of a sealing piece in another embodiment of the battery pack of Fig. 1 wherein a PTC device is attached to the sealing piece.
[Fig. 4] A schematic perspective view of a battery pack in the prior art.

### Explanation of the Reference Numbers

- 100 -: canister
- 102 -: sealing piece
- 104 -: terminal
- 106 -: collector
- 108 -: thin layer section
- 110 -: electrolyte supply opening
- 112 -: packing
- 120 -: PTC device
- 122 -: PTC element
- 124, 126 -: electrode
- 128 -: metal lead
- 130 -: bonding material
- 132 -: metal lead
- 134 -: bonding material
- 136 -: welded section

### Embodiment to Practice the Invention

In the present invention, the PTC device may be a conventional polymer PTC device comprising a PTC element, (preferably a laminar PTC element), formed by an electrically conductive polymer (for example a polyethylene) having carbon black dispersed therein as conductive filler, and electrodes (preferably laminar electrodes of a metal material and more preferably foil electrodes) placed on both surfaces thereof.

However, a particularly preferred PTC device contains nickel powder or a nickel and cobalt alloy powder as the electrically conductive filler. It is noted that such an alloy may constitute only surface portions of particles composing the powder, and the inner portions of the particles may be composed of nickel. Such nickel powder containing cobalt is disclosed for example in WO2005/023461, and it is particularly preferred that a PTC device containing the nickel powder disclosed therein as the filler is used in the present invention. It is noted that the nickel powder is disclosed for example in Japanese Patent No.3635089, and it is also preferred that a PTC device containing the nickel powder disclosed therein as the filler is used in the present invention.

When such filler is used, the size of the PTC device itself becomes very small, so that the area of the sealing piece which area is occupied by the PTC device may be made small. Therefore, for a sealing piece having functions other than a PTC device mounting function (supplying an opening to supply electrolyte, enhancing safety by providing an ultra-thin section, having the terminal protrude, etc.), the PTC device formed by using such fillers is particularly preferred.

In the present invention, the PTC device is attached on top of the sealing piece. Such positional relationship between the PTC device and the sealing piece could be said that "the PTC device is attached directly to the sealing piece" as explained above. One of the electrodes of the PTC device is connected electrically to the surface of the metal constituting the sealing piece directly or via a metal lead, preferably a metal lead in the form of a strip. Upon such electrically connecting, when one of the electrodes of the PTC device is connected directly to the metal surface of the sealing piece or the metal lead, the use of the bonding material such as the solder or the electrically conductive adhesive is preferred, and when the lead is connected to the metal surface of the sealing piece, the use of for example welding (ultrasonic welding or the like) is preferred. It is of course that such connecting simultaneously leads to the mechanical connection.

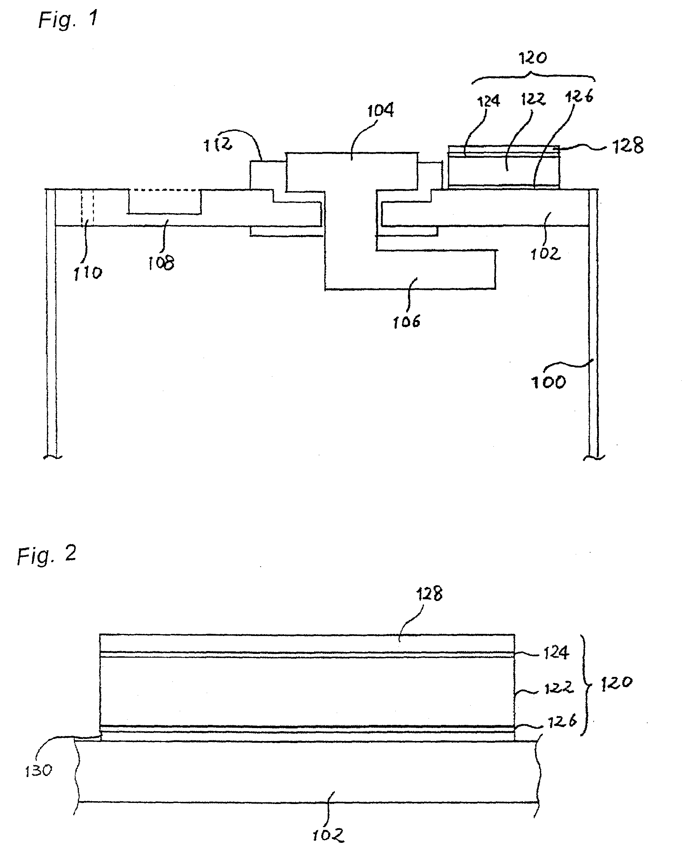

Fig. 1 shows the upper portion of the battery pack of the present invention (a portion wherein the sealing piece is placed) as a schematic cross-sectional view. In the illustrated embodiment, the sealing piece (or sealing plate) 102 is fitted in the opening of the canister 100 for the battery. A terminal 104 is inserted to penetrate through the sealing piece approximately at the center of the sealing piece to connect to the collector element 106 below. It is noted that in the illustrated embodiment, these are shown integrally for the sake of simplicity. The canister 100, and therefore the sealing piece 102 fitted thereinto serves as one of the electrodes (for example the positive electrode), and the terminal 104 serves as the other electrode (for example the negative electrode).

Generally, the sealing piece is formed of a thin sheet of a metal such as aluminum, a steel and the like, and it has an ultra-thin section 108 that can function as a safety valve, it may further have an opening 110 to supply electrolyte to the canister. It is noted that in order to keep the terminal 104 and the sealing piece 102 electrically insulated, an insulating material 112 is placed between them. The insulating material also serves as a packing material.

The PTC device 120 is placed directly on top of the sealing piece 102. The PTC device 120 comprises a conductive polymer element 122 and metal layers 124 and 126 placed in the form of foils on both sides of the element. In the illustrated embodiment, a metal lead 128 is placed on the metal layer 124. The metal lead 128 may be placed in any appropriate method, and is connected electrically with the metal layer 124 through a connecting means, for example welding, an electrically conductive adhesive, soldering or the like (such connecting means is omitted in Figs. 1 to 3 and not illustrated). In the illustrated embodiment, the PTC device is attached to the top of the sealing piece 102 by directly connecting the metal layer 126 of the PTC device on top of the sealing piece 102.

It is noted that the metal lead 128 may be in any appropriate form. In the illustrated embodiment, the metal lead 128 is in the form of a plate which has the same size as that of the electrode 124 of the PTC device. In other embodiment, the metal lead 128 may be on a portion of the electrode 124 of the PTC device. Also, the metal lead may comprise a section which extends from a portion, a side or a whole of the periphery of the electrode 124 in addition to a section which is placed on at least a portion of the electrode. For example, the metal lead 128 may be in the form of a strip which comprises a section which is placed on at least a portion of the electrode 124 of the PTC device and a section which extends outwardly from the electrode 124 (see Fig. 3). In this embodiment, a portion of the metal lead may be placed on the electrode 124 of the PTC device, and they may be spot connected electrically (for example, they may be spot welded).

Fig. 2 shows a schematic enlarged view of a portion of the sealing piece having the PTC device 120 in the embodiment shown in Fig. 1. The embodiment of Fig. 2 shows the PTC device electrically connected directly to the sealing piece 102 using an electrically conductive adhesive 130. The PTC device 120, more particularly the metal layer 126 thereof is adjacent to the sealing piece 102, and the electrically conductive adhesive 130 is placed in the form of a layer between the two. In the illustrated embodiment, the adhesive layer is present over the entire bottom surface of the PTC device, but it does not necessarily need to be present over the entire surface. The layer of adhesive 130 is illustrated with the thickness exaggerated in order to make clear that it is present.

The illustrated sealing piece may be manufactured by coating an electrically conductive adhesive on the top of the sealing piece 102 and heating with the PTC device 120 placed on top of it. It can be similarly manufactured by coating a solder paste instead of the electrically conductive adhesive. By forming a secondary battery using the sealing piece 102 having the PTC device 120, a secondary battery pack may be obtained. In another embodiment, after forming a secondary battery in the conventional method using the sealing piece, the PTC device may be bonded to the sealing piece 102 by applying an electrically conductive adhesive or a solder paste as described above, whereby the secondary battery pack is manufactured.

Fig. 3 shows schematically the PTC device 120 placed directly on top of the sealing piece 102 similarly to Fig. 2. It is noted that in the illustrated embodiment, the PTC device 120 is electrically connected indirectly (in contrast to "directly" in Fig. 2) to the sealing piece 102 via a lead 132 placed on the sealing piece 102 side. The PTC device and the metal lead 132 are connected by a layer 134 of a solder or an electrically conductive adhesive. The metal lead 132 is extended outward from at least a portion of the periphery of the PTC device 120, and is welded to the sealing piece 102 at the extended portion. In the illustrated embodiment, it is connected to the sealing piece 102 at the welded sections 136. It is noted that the welded sections may be formed outside of the entire periphery of the PTC device, or a portion(s) thereof.

For example, when the electrode 126 of the PTC device is made of a nickel foil and it is connected to an aluminum sealing piece 102 using an bonding material such as a solder, an electrically conductive adhesive or the like, the resistance between them is likely to become high because of the connection between different materials. In such a case, by putting a nickel lead 132 between the PTC device and the sealing piece 102 and welding the nickel lead 132 and the sealing piece 102, the resistance as a whole may possibly become smaller than in the case where the nickel lead is not used, and the connection strength between the PTC device and the sealing piece may also become high. Thus, it is preferred that a lead of the same material as that of the electrode of the PTC device is used and this lead is welded with the sealing piece 102.

To manufacture such a sealing piece 102, a metal lead 132 is bonded to a PTC device 120 by a bonding material such as an electrically conductive adhesive, a solder or the like so that a PTC device having the metal lead is obtained, and such PTC device is bonded by welding to the sealing piece 102. By forming a secondary battery using thus obtained sealing piece 102, a battery pack is obtained. In another embodiment, as described above, a PTC device 120 having a metal lead 132 bonded thereto is welded to the sealing piece 102 after manufacturing the secondary battery.

In a particularly preferred embodiment, after connecting the PTC device 120 to the sealing piece 102 as described above to manufacture the battery pack, the sealing piece 102 is molded using a resin, so that the PTC device is embedded in the resin. By doing this, the PTC device is not exposed, so that the PTC device is prevented from being damaged, while at the same time the lead is not exposed over a long distance so that the possibility of occurrence of a short circuit is also dramatically reduced, and the safety of the battery pack is improved. Further, compared with a battery pack in the prior art wherein the PTC device is placed on its own on the side surface and protrudes therefrom, an external force is less apt to be applied to the PTC device since the PTC device is place on the sealing piece which intrinsically has the protrusion.

By using the sealing piece as described above, the increase in volume of the battery pack is kept to a minimum upon placing the PTC device to the secondary battery, and preferably the bulk of the secondary battery pack will substantially not increase. Further, since the canister 100 and the PTC device are connected directly, a long lead such as would be needed to place the PTC device on the side surface of the canister is not required, thereby preventing by that much any unnecessary increase in resistance value.

It is noted that in the sealing piece 102 described above, the PTC device is adjacent to the sealing piece 102 and placed on top thereof, but in another embodiment, the PTC device may be placed on a terminal 104 protruding from the sealing piece 102. In this case also, there is the advantage that a safe battery pack may be achieved, as in the placement described above, and no long lead is required.

### Industrial Applicability

By using the sealing piece, a more compact secondary battery pack may be constructed, which is useful in size reduction of handheld electronic devices and the like.

It is noted that the present application claims a priority under the Paris Convention based on Japanese Patent Application No. 2005-143024 (filed on May 16, 2005, Title of the Invention: Battery Pack and Sealing Piece for the Same), and all contents of such application are incorporated herein by reference in their entirety.

## Claims

1. A battery pack comprising a PTC device and a secondary battery which comprises a canister and a sealing piece to seal an opening of the canister, **characterized in that** the sealing piece has the PTC device which is attached on top of the sealing piece.

2. The battery pack according to Claim 1 wherein the sealing piece is placed adjacently to the PTC device, and the PTC device is attached to the sealing piece by a connecting element which is present between the PTC device and the sealing piece to connect them electrically.

3. The battery pack according to Claim 2 wherein the connecting element is a layer of a bonding material.

4. The battery pack according to Claim 2 wherein the connecting element is a metal lead and a layer of a bonding material on each side of the metal lead.

5. The battery pack according to Claim 2 wherein the connecting element is a metal lead and a layer of a bonding material positioned between the metal lead and the PTC device, the layer of the bonding material connects the PTC device and the metal lead, and the metal lead is connected to the sealing piece by welding.

6. The battery pack according to in any one of Claims 3 to 5 wherein the bonding material is an electrically conductive adhesive or a solder.

7. The battery pack according to in any one of Claims 1 to 6 wherein the PTC device comprises a PTC element in which nickel powder or nickel/cobalt powder is used as an electrically conductive filler.

8. A sealing piece used for manufacturing a battery pack comprising a PTC device and a secondary battery comprising a canister and a sealing piece to seal an opening of the canister wherein the PTC device is attached on top of the sealing piece.

9. The sealing piece according to Claim 8 wherein the sealing piece in placed adjacently to the PTC device, and the PTC device is attached to the sealing piece by a connecting element which is present between the PTC device and the sealing piece to connect them electrically.

10. The sealing piece according to Claim 9 wherein the connecting element is a layer of a bonding material.

11. The sealing piece according to Claim 9 wherein the connecting element is a metal lead and a layer of a bonding material on each side of the metal lead.

12. The sealing piece according to Claim 9 wherein the connecting element is a metal lead and a layer of a bonding material positioned between the metal lead and the PTC device, the layer of the bonding material connects the PTC device and the metal lead, and the metal lead is connected to the sealing material by welding.

13. The sealing piece according to any one of Claims 10 to 12 wherein the bonding material is an electrically conductive adhesive or a solder.

14. The sealing piece according to in any one of Claims 8 to 13 wherein the PTC device comprises a PTC element in which nickel powder or nickel/cobalt powder is used as an electrically conductive filler.
